# FASCICULE DE BREVET EUROPEEN

(11) **EP 1 900 584 B1**
(45) Date de publication et mention de la délivrance du brevet: **07.04.2010**
(21) Numéro de dépôt: 07115153.4
(22) Date de dépôt: 29.08.2007
(51) Int. Cl.: B60T 13/575

(54) **Servomoteur d'assistance au freinage**
Bremskraftverstärker
Brake booster

(30) Priorité: 13.09.2006 FR 0608064
(43) Date de publication de la demande: 19.03.2008
(73) Titulaire: ROBERT BOSCH GMBH, 70442 Stuttgart (DE)
(72) Inventeur: Beylerian, Bruno, 95380 Louvres (FR); Nen, Yannick, 91290 Arpajon (FR); Scrivano, Nicolas, 38000 Grenoble (FR); Bernadat, Olivier, 94170 Le Perreux (FR)
(74) Mandataire: Hurwic, Aleksander Wiktor

(56) Documents cités:
- WO-A-02/094628
- DE-A1- 10 149 626

## Description

L'invention concerne un servomoteur d'assistance au freinage pour systèmes de freinage d'un véhicule automobile équipés de freins assistés.

### ETAT DE LA TECHNIQUE

Un servomoteur d'assistance au freinage tel que décrit dans DE 101 49 626 ou WO 02/094628 comporte essentiellement une enceinte comprenant deux chambres (la chambre avant et la chambre arrière) séparées par une membrane mobile solidaire d'un piston. Une tige de commande se déplace vers l'avant du véhicule lorsque le conducteur du véhicule actionne la pédale de frein. Ce déplacement de la tige de commande est transmis à un plongeur qui actionne des moyens d'assistance et le piston du servomoteur. Généralement, ces moyens d'assistance comprennent une valve trois voies dont l'actionnement permet d'interrompre la communication entre la chambre avant et la chambre arrière du servomoteur et de mettre cette dernière chambre à l'atmosphère ambiante. Etant donné que la chambre avant est normalement sous vide, et en raison de la différence de pression entre les deux chambres, une force d'assistance est exercée sur le piston qui sépare les deux chambres. Le piston se déplace alors vers l'avant en agissant sur une tige de poussée servant à actionner les pistons primaire et secondaire d'un maître-cylindre du circuit de freinage.

Habituellement, le piston du servomoteur servant à transmettre la force d'assistance à la tige de poussée agit sur cette dernière au travers d'un disque de réaction réalisé en un matériau déformable tel qu'un élastomère.

Au repos, un faible jeu existe entre l'extrémité avant du plongeur et le disque de réaction. Lorsque le conducteur du véhicule commence à actionner la pédale de frein, ce faible jeu permet au plongeur de se déplacer immédiatement vers l'avant pour commander les moyens d'assistance et pour assurer une réponse immédiate des freins.

Lorsque la force d'assistance dépasse un certain seuil, le jeu existant initialement au repos entre le disque de réaction et la face avant du plongeur est rattrapé, de sorte que le plongeur est en contact avec le disque de réaction et que ce dernier renvoie vers la pédale de frein une force de réaction représentative de l'effort de freinage appliqué sur les freins du véhicule. Cet agencement bien connu permet au conducteur de doser l'effort de freinage qu'il exerce sur la pédale en fonction de la résistance qu'il rencontre, laquelle augmente avec cet effort. Il ressort de l'explication qui précède que la réaction à la pédale ne commence à apparaître que lorsque la force d'assistance engendrée par l'actionnement de la pédale de frein dépasse un certain seuil.

Certains systèmes, prévoit que le plongeur qui applique l'effort de freinage au disque de réaction comporte une partie centrale mobile, ce qui permet d'obtenir une courbe fonctionnement (effort de freinage fourni au maître cylindre/effort d'entrée fourni par le conducteur sur la pédale de frein) à double pente. Il en résulte pour le conducteur une possibilité de dosage plus souple et/ou à effort équivalent appliqué à la pédale de frein, un effort de freinage plus important fourni au maître cylindre.

### RESUME DE L'INVENTION

L'invention concerne donc un servomoteur d'assistance au freinage comprenant :
- Une tige de commande permettant de commander une vanne trois voies,
- Un plongeur mobile axialement sous la commande de la tige de commande et présentant une face d'appui d'extrémité,
- Un noyau central disposé dans une cavité axiale du plongeur et mobile axialement dans ledit plongeur, une face d'appui d'extrémité de ce noyau étant destinée à affleurer le plan de la face d'appui d'extrémité du plongeur,
- Un piston pneumatique mobile également axialement sous l'effet d'une différence de pression induite par la vanne trois voies, présentant un trou entouré d'une face annulaire d'appui et dans lequel coulisse ledit plongeur (2),
- Un disque de réaction en matériau déformable élastiquement présentant une face arrière appliquée à la face annulaire d'appui du piston pneumatique et destinée à recevoir les efforts appliqués par cette face annulaire, par la face d'appui d'extrémité du plongeur et par la face d'appui d'extrémité du noyau central,
- Un dispositif de poussée dont une première extrémité est en appui contre une face avant du disque de réaction opposée à la face arrière et dont une deuxième extrémité est en appui contre un organe à commander, de façon à transmettre un effort du disque de réaction vers l'organe à commander,

Selon l'invention, une goupille est disposée transversalement par rapport au plongeur et au noyau central. Cette goupille est solidaire axialement du noyau central et est mobile axialement avec le noyau central. De plus, un ressort est disposé, autour du plongeur, entre la goupille et un épaulement du plongeur de façon à pousser la goupille, et donc le noyau central, vers la face d'appui d'extrémité du plongeur.

Selon une forme de réalisation préférée de l'invention, les parois de la cavité du plongeur possèdent des fenêtres de forme allongée selon l'axe du plongeur. Ces fenêtres sont traversées par ladite goupille et permettent le déplacement axial de ladite goupille.

Selon une forme de réalisation de l'invention, le noyau central comporte une gorge périphérique et la goupille comporte deux branches disposées dans cette gorge de part et d'autre du noyau central.

Selon une autre forme de réalisation, la goupille est montée à force dans le noyau central.

On pourra également prévoir une plaque d'appui interposée entre ladite goupille et le ressort.

### BREVE DESCRIPTION DES FIGURES

Les différents objets et caractéristiques de l'invention apparaîtront plus clairement dans la description et dans les figures annexées qui représentent:
- la figure 1, un servomoteur d'assistance au freinage connu dans la technique,
- la figure 2, une vue partielle d'un servomoteur d'assistance au freinage selon l'invention,
- les figures 3a et 3b, un exemple de réalisation d'une goupille d'immobilisation du noyau central selon l'invention applicable au servomoteur de la figure 2,
- la figure 4, une courbe de fonctionnement d'un servomoteur d'assistance au freinage selon l'invention.

### DESCRIPTION DETAILLEE

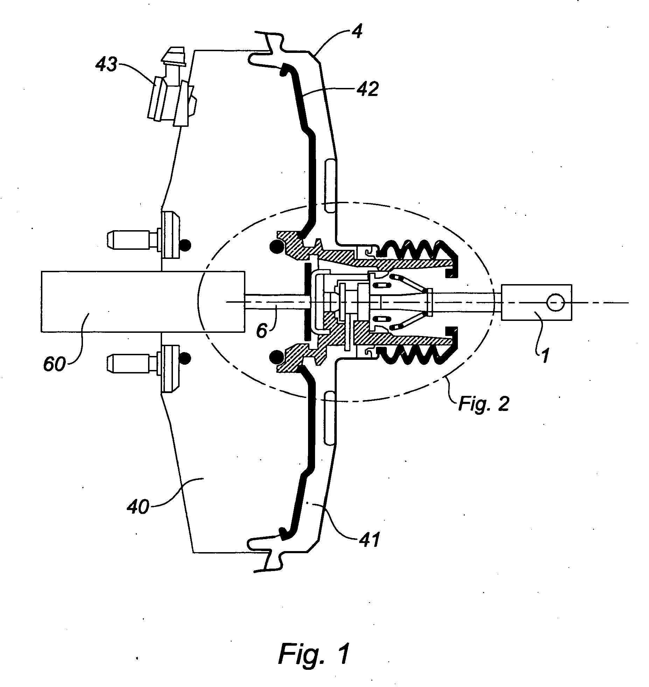

La figure 1 représente donc un servomoteur d'assistance au freinage connu dans la technique et elle permet de situer l'invention dans le cadre d'un servomoteur. Dans la description qui va suivre, on considèrera que l'avant du dispositif est situé à gauche sur la figure et l'arrière du dispositif est situé à droite. Ce servomoteur comporte un boîtier 4 contenant une chambre avant 40 et une chambre arrière 41 séparées l'une de l'autre par une jupe 42 dont la périphérie est fixée de façon étanche à la paroi périphérique du boîtier. Une vanne 43 permet de raccorder une pompe à vide à la chambre avant 40. Dans la suite de la description, on considèrera que le vide est assuré en permanence dans la chambre avant.

Au centre du boîtier, un système de transmission d'efforts (entouré d'un trait mixte sur la figure 1) est commandée par une tige de commande 1. Ce système permet de transmettre des efforts de freinage à un maître cylindre à l'aide d'une tige de poussée 6, comme cela sera expliqué ultérieurement

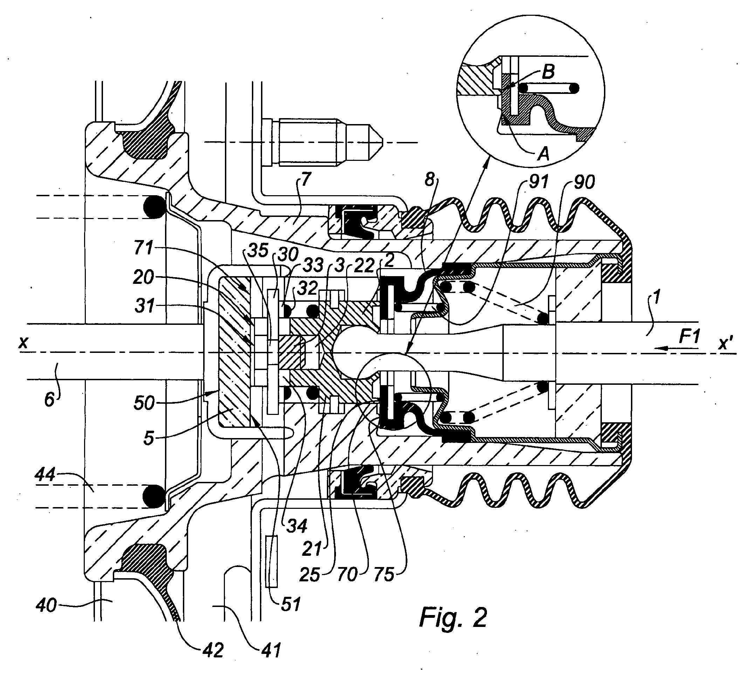

En se reportant à la figure 2, on va donc décrire un système de transmission d'efforts d'un servomoteur selon l'invention.

L'ensemble du système est disposé selon l'axe XX'

Une tige de commande 1 permet de commander le déplacement d'un plongeur 2 selon l'axe XX'. Le plongeur 2 est mobile dans un piston 7 qui est solidaire de la jupe 42 (voir figure 1).

Le plongeur et le piston possèdent des faces avant d'extrémité 25, 75 respectivement, qui sont destinées à entrer en contact indépendamment avec un joint 8 également mobile selon l'axe XX'. L'ensemble de ces faces d'extrémité et du joint forme une vanne trois voies comportant deux clapets. Un premier clapet A est constitué par la face avant 75 du piston et par le joint 8. Un deuxième clapet B est constitué par la face avant 25 du plongeur et par le joint 8. Cette vanne trois voies permet:
- soit de relier la chambre arrière 41 du servomoteur à la chambre avant 40 et de l'isoler de la pression atmosphérique,
- soit d'isoler la chambre arrière 41 à la fois de la chambre avant 40 et de l'atmosphère (position représentée par la figure 2),
- soit d'isoler la chambre arrière de la chambre avant et de la mettre en communication avec la pression atmosphérique.

La pression dans la chambre arrière 41 est donc contrôlée par la vanne trois voies laquelle est commandée par la tige de commande

Lorsque la tige de commande 1 est en position de repos, en l'occurrence tirée vers la droite, le clapet A établit une communication entre les deux chambres 40 et 41 du servomoteur. La chambre arrière 41 étant alors soumise à la même dépression que la chambre avant 40, le piston 7 est repoussé vers la droite, en position de repos, par un ressort 44. L'actionnement de la tige de commande 1 vers la gauche a pour effet, dans un premier temps, de fermer le clapet A de façon qu'il isole l'une de l'autre les chambres 40 et 41 puis, dans un deuxième temps, d'ouvrir le clapet B de façon à mettre la chambre arrière 41 à la pression atmosphérique. La différence de pression entre les deux chambres alors ressentie par la jupe 42 exerce sur le piston 7 une poussée qui tend à le déplacer vers la gauche en comprimant le ressort 44.

Par ailleurs, dans l'alignement de la tige de commande 1 et du plongeur 2, on trouve une tige de poussée 6 destinée à transmettre les efforts de freinage du servomoteur vers les pistons primaire et secondaire du maître cylindre. Le piston 7 et le plongeur 2 peuvent agir sur la tige de poussée 6 par l'intermédiaire d'un disque de réaction 5.

Le plongeur 2 comporte une cavité axiale 22 dans laquelle est placé un noyau central 3. Ce noyau est mobile axialement dans la cavité 22.

Une goupille 30 est traverse transversalement le plongeur et est solidaire axialement du noyau central 3. Une fenêtre 34 est prévue dans la paroi de la cavité 22 pour permettre à la goupille et au noyau central de se déplacer axialement dans la cavité 22.

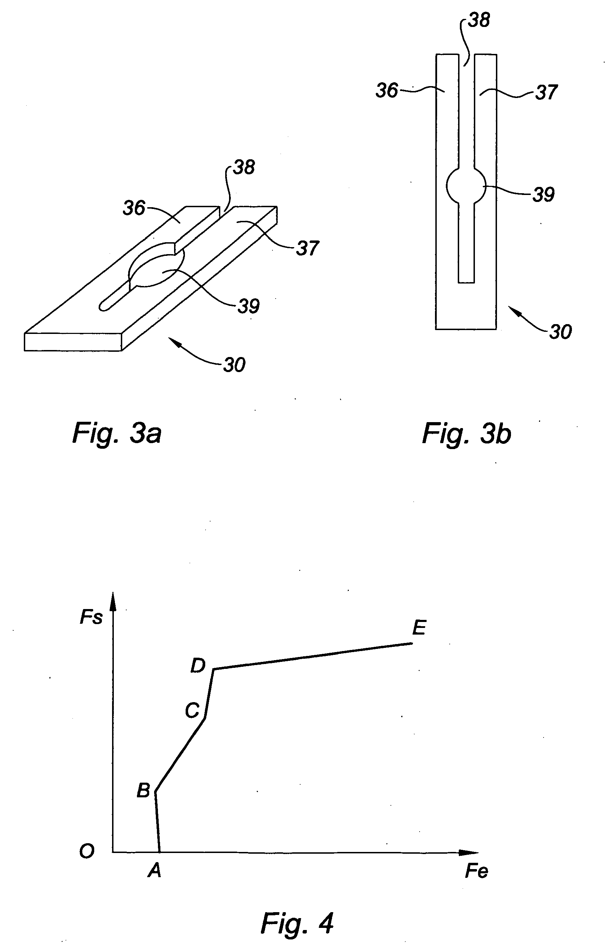

Selon l'exemple de réalisation de la figure 3, la goupille peut comporter deux branches 37 et 36 séparées par une fente 38. Au centre de la goupille est prévu un élargissement 39 destiné à être placé autour du noyau central. Le noyau central comporte alors une gorge 35 destinée à recevoir cet élargissement 39 de la goupille.

La goupille pourrait prendre une autre forme de réalisation du moment qu'elle soit liée axialement avec le plongeur et qu'elle traverse transversalement le plongeur.

Le plongeur comporte un épaulement 21.

Un ressort 32 est placé autour du plongeur entre cet épaulement 21 et la goupille 30. Prenant appui sur l'épaulement, le ressort tend à repousser la goupille et donc le noyau central vers la gauche jusqu'à ce que la face avant 31 du noyau central affleure le plan de la surface avant 20 du plongeur.

On note que sur la figure 2 on a prévu avantageusement une rondelle 33 entre la goupille 30 et ressort 32 pour offrir une surface d'appui stable au ressort.

Selon l'invention, on a donc un plongeur 2 muni d'un noyau central 3 mobile axialement dans le plongeur selon lequel la longueur du plongeur est quasiment équivalente à la longueur d'un plongeur classique. On a donc un système sensiblement aussi compact qu'un système classique sans noyau central mobile dans le plongeur.

On va donc maintenant décrire le fonctionnement d'un tel dispositif.

L'effort de freinage qu'exerce, par l'intermédiaire du plongeur 2 et du noyau 3, la tige de commande 1 à destination du maître-cylindre, et l'effort d'assistance au freinage résultant de la poussée du piston 7, sont appliqués sur la face arrière 51 (droite) du disque de réaction 5 dont la face avant 50 (gauche) retransmet ces efforts à la tige de poussée 6, laquelle a pour fonction d'actionner les pistons primaire et secondaire du maître-cylindre.

Le noyau central 3 présente une face axiale d'extrémité 31 qui constitue une première surface d'appui avant. Le plongeur 2 présente une surface annulaire 20 qui entoure la face 31 du noyau central et qui constitue une deuxième surface d'appui avant. Le piston 7 présente une surface annulaire axiale 71, qui entoure la face 20 du plongeur et qui constitue une troisième surface d'appui avant.

Le disque de réaction 5 présente une face arrière 51 et une face avant 50. La face arrière 51 est destinée à recevoir les efforts appliqués par les première et seconde surfaces d'appui avant 20 et 71. La face avant 50 est destinée à recevoir les forces de réaction des pistons du maître cylindre.

Au repos (absence de freinage), la valve A est ouverte, la valve B est fermée. La chambre arrière est isolée de l'air atmosphérique et est reliée à la chambre avant. Les deux chambres sont sensiblement aux mêmes pressions.

Lors d'une commande de freinage, la tige de commande 1 se déplace vers la gauche et pousse le plongeur 2. Le ressort 91 pousse le joint 8 qui accompagne ainsi le plongeur 2. Le clapet A se ferme. La chambre arrière est isolée de la chambre avant.

La face arrière 25 du plongeur se sépare du joint 8. Le clapet B s'ouvre. La chambre arrière 41 du servomoteur est mise à la pression atmosphérique par le canal 70 et par le clapet B qui vient de s'ouvrir.

Sur le graphique de fonctionnement de la figure 4, le système est dans la zone de fonctionnement OA du graphique. Une force d'entrée (Axe Fe) jusqu'au point A a été exercée sur la tige de commande, mais aucune force de sortie (Axe Fs) n'a été retransmise à la tige de poussée 6 vers le maître cylindre de frein.

En raison de la différence de pression entre les chambres avant et arrière du servomoteur, le piston 7 se déplace vers la gauche. Un effort de freinage est transmis, par le piston 7, à la tige de poussée 6 vers les pistons du maître cylindre.

Sur le graphique de fonctionnement de la figure 4, le système est dans la zone de fonctionnement AB du graphique. Une force de sortie est retransmise à la tige de poussée 6 vers le maître cylindre de frein.

Les pistons du maître cylindre opposent une force de réaction vers la droite. Cette force de réaction est supportée par la surface avant 71 du piston 7 du servomoteur. Cette force de réaction est suffisante pour que le disque de réaction se déforme et qu'il remplisse le jeu existant entre les surfaces d'extrémité 20 et 31 du plongeur 2 et le disque de réaction.

Lorsque l'effort exercé par la tige de commande 1 augmente le système se trouve dans la zone de fonctionnement BC du graphique de la figure2.

Lorsque l'effort ayant suffisamment augmenté, la force de réaction des pistons du maître cylindre atteint une valeur suffisante pour que le disque de réaction remplisse le jeu existant entre les surfaces d'extrémité 20 et 31 du plongeur 2 et du noyau 3, on se trouve au point de fonctionnement C de la figure. L'effort est alors transmis à la surface d'appui 31 du noyau sont supérieur à la charge du ressort 32. L'effort transmis vers la tige de poussée est donc démultiplié en raison de la variation des surfaces transmettant les efforts.

Si l'effort transmis par la tige de commande augmente encore, sur la figure 4, le système se trouve dans la zone de fonctionnement CD. Le disque réaction pousse le noyau central 3 qui comprime par l'intermédiaire de la goupille 30 le ressort 32 qui a été calibré pour qu'en début de la zone CD, le disque de réaction transmet essentiellement l'effort sur la surface 20 du plongeur 2 qui change la démultiplication. Au fur et à mesure que la force appliquée augmente, la force de réaction des pistons du maître cylindre et transmise par la tige de poussée 6 augmente conduisant à ce que le disque de réaction remplisse l'espace existant ente le disque de réaction et la surface d'appui 31 du noyau central 3. A ce stade de fonctionnement, lorsque que la pression atmosphérique est admise dans chambre 41 et cet espace est entièrement rempli par le disque de réaction, le système se situe au point D sur la figure 4.

Une augmentation de la force exercée se traduit par le fait que la force est maintenant transmise essentiellement par les surfaces 31 et 20 du plongeur, la différence de pression entre les chambres 40 et 41 est au maximum.

On se trouve maintenant dans la zone de fonctionnement DE de la figure 4.

Le système de l'invention prévoyant un noyau central mobile dans le plongeur 2, permet ainsi d'obtenir un fonctionnement tel qu'illustré par la figure 4.

## Revendications

1. Servomoteur d'assistance au freinage comprenant :
• Une tige de commande (1) permettant de commander une vanne trois voies (A, B),
• Un plongeur (2) mobile axialement sous la commande de la tige de commande (1) et présentant une face d'appui d'extrémité (20),
• Un noyau central (3) disposé dans une cavité axiale (22) du plongeur et mobile axialement dans ledit plongeur, une face d'appui d'extrémité (31) de ce noyau étant destinée à affleurer le plan de la face d'appui d'extrémité (20) du plongeur,
• Un piston pneumatique (7) mobile également axialement sous l'effet d'une différence de pression induite par la vanne trois voies, présentant un trou entouré d'une face annulaire d'appui (71) et dans lequel coulisse ledit plongeur (2),
• Un disque de réaction (5) en matériau déformable élastiquement présentant une face arrière (51) appliquée à la face annulaire d'appui (71) du piston pneumatique et destinée à recevoir les efforts appliqués par cette face annulaire, par la face d'appui d'extrémité (20) du plongeur (2) et par la face d'appui d'extrémité (31) du noyau central (3),
• Un dispositif de poussée (6) dont une première extrémité est en appui contre une face avant (50) du disque de réaction (5) opposée à la face arrière (51) et dont une deuxième extrémité est destinée à être en appui contre un organe à commander, de façon à transmettre un effort du disque de réaction (5) vers l'organe à commander,
• **caractérisé en ce qu'**il comporte une goupille (30) disposée transversalement par rapport au plongeur (2) et au noyau central (3), cette goupille étant solidaire axialement du noyau central (3) et mobile axialement avec le noyau central (2), un ressort (32) étant disposé, autour du plongeur, entre la goupille et un épaulement (21) du plongeur de façon à pousser la goupille, et donc le noyau central, vers la face d'appui d'extrémité (20) du plongeur.

2. Servomoteur d'assistance au freinage selon la revendication 1, **caractérisé en ce que** les parois de la cavité (22) du plongeur possèdent des fenêtres de forme allongée selon l'axe du plongeur, traversées par ladite goupille (30), pour permettre le déplacement axial de ladite goupille (30).

3. Servomoteur d'assistance au freinage selon la revendication 2, **caractérisé en ce que** le noyau central comporte une gorge périphérique (35) et **en ce que** la goupille (30) comporte deux branches (36, 37) disposées dans cette gorge de part et d'autre du noyau central.

4. Servomoteur d'assistance au freinage selon la revendication 2, **caractérisé en ce que** la goupille (30) est montée à force dans le noyau central (3).

5. Servomoteur d'assistance au freinage selon l'une des revendications 3 ou 4, **caractérisé en ce qu'**une plaque d'appui est interposée entre ladite goupille (30) et le ressort (32).

## Claims

1. Brake booster comprising:
• a control rod (1) to control a three-way valve (A,B),
• a plunger (2) able to move axially under the control of the control rod (1) and having an end bearing face (20),
• a central core (3) positioned in an axial cavity (22) of the plunger and able to move axially within the said plunger, an end bearing face (31) of this core being intended to lie flush with the plane of the end bearing face (20) of the plunger,
• a pneumatic piston (7) likewise able to move axially under the effect of a pressure difference brought about by the three-way valve, having a hole surrounded by an annular bearing face (71) and in which the said plunger (2) slides,
• a reaction disc (5) made of elastically deformable material having a rear face (51) pressed firmly against the annular bearing face (71) of the pneumatic piston and intended to receive the load applied by this annular face, by the end bearing face (20) of the plunger (2) and by the end bearing face (31) of the central core (3),
• a thrust device (6) a first end of which bears against a front face (50) of the reaction disc (5) which is the opposite face to the rear face (51), and a second end of which is intended to bear against a component that is to be controlled, so as to transmit load from the reaction disc (5) to the component that is to be controlled,
• **characterized in that** it comprises a pin (30) positioned transversely with respect to the plunger (2) and to the central core (3), this pin being axially secured to the central core (3) and able to move axially with the central core (2), a spring (32) being positioned around the plunger between the pin and a step (21) of the plunger so as to push the pin, and therefore the central core, towards the end bearing face (20) of the plunger.

2. Brake booster according to Claim 1, **characterized in that** the walls of the cavity (22) of the plunger have apertures of elongate shape along the axis of the plunger, through which the said pin (30) passes to allow the said pin (30) some axial movement.

3. Brake booster according to Claim 2, **characterized in that** the central core comprises a peripheral groove (35), and **in that** the pin (30) has two branches (36, 37) positioned in this groove on each side of the central core.

4. Brake booster according to Claim 2, **characterized in that** the pin (30) is force-fitted into the central core (3).

5. Brake booster according to one of Claims 3 and 4, **characterized in that** a bearing plate is interposed between the said pin (30) and the spring (32).

## Patentansprüche

1. Servomotor zur Bremsunterstützung mit
• einer Steuerstange (1), die die Steuerung eines Dreiwegeventils (A, B) ermöglicht,
• einem Tauchkolben (2), der durch die Steuerung durch die Steuerstange (1) axial beweglich ist und eine Endanlagefläche (20) aufweist,
• einem mittleren Kern (3), der in einer axialen Vertiefung (22) des Tauchkolbens angeordnet und im Tauchkolben axial beweglich ist, wobei eine Endanlagefläche (31) dieses Kerns dazu vorgesehen ist, mit der Ebene der Endanlagefläche (20) des Tauchkolbens bündig zu sein,
• einem pneumatischen Kolben (7), der unter der Wirkung einer von dem Dreiwegeventil bewirkten Druckdifferenz auch axial beweglich ist und ein Loch aufweist, das von einer ringförmigen Anlagefläche (71) umgeben ist und in dem der Tauchkolben (2) gleitet,
• einer Reaktionsscheibe (5) aus elastisch verformbarem Material, die eine hintere Fläche (51) aufweist, die an der ringförmigen Anlagefläche (71) des pneumatischen Kolbens anliegt und dazu vorgesehen ist, die von dieser ringförmigen Fläche, von der Endanlagefläche (20) des Tauchkolbens (2) und von der Endanlagefläche (31) des mittleren Kerns (3) aufgebrachten Kräfte aufzunehmen,
• einer Schubvorrichtung (6), bei der ein erstes Ende an einer zur hinteren Fläche (51) entgegengesetzten Vorderfläche (50) der Reaktionsscheibe (5) anliegt und ein zweites Ende dazu vorgesehen ist, an einem zu steuernden Organ anzuliegen, so dass eine Kraft der Reaktionsscheibe (5) zu dem zu steuernden Organ übertragen wird,
• **dadurch gekennzeichnet, dass** er einen Stift (30) aufweist, der quer zum Tauchkolben (2) und zum mittleren Kern (3) angeordnet ist, wobei dieser Stift mit dem mittleren Kern (3) axial fest verbunden und axial mit dem mittleren Kern (3) beweglich ist, wobei eine Feder (32) zwischen dem Stift und einem Absatz (21) des Tauchkolbens um den Tauchkolben herum angeordnet ist, so dass der Stift und somit der mittlere Kern zur Endanlagefläche (20) des Tauchkolbens gedrückt wird.

2. Servomotor zur Bremsunterstützung nach Anspruch 1, **dadurch gekennzeichnet, dass** die Wände der Vertiefung (22) des Tauchkolbens Öffnungen aufweisen, die gemäß der Achse des Tauchkolbens eine längliche Form haben und durch die der Stift (30) dringt, um die axiale Verlagerung des Stifts (30) zu ermöglichen.

3. Servomotor zur Bremsunterstützung nach Anspruch 2, **dadurch gekennzeichnet, dass** der mittlere Kern eine Umfangsnut (35) aufweist und der Stift (30) zwei Arme (36, 37) aufweist, die in dieser Nut auf der einen und auf der anderen Seite des mittleren Kerns angeordnet sind.

4. Servomotor zur Bremsunterstützung nach Anspruch 2, **dadurch gekennzeichnet, dass** der Stift (30) mit Kraft im mittleren Kern (3) angebracht ist.

5. Servomotor zur Bremsunterstützung nach einem der Ansprüche 3 und 4, **dadurch gekennzeichnet, dass** eine Auflageplatte zwischen dem Stift (30) und der Feder (32) angeordnet ist.
